(19) Europäisches Patentamt
European Patent Office
Office européen des brevets

(11) **EP 2 496 451 B1**

(12) **EUROPÄISCHE PATENTSCHRIFT**

(45) Veröffentlichungstag und Bekanntmachung des Hinweises auf die Patenterteilung:
**16.04.2014   Patentblatt 2014/16**

(21) Anmeldenummer: **10752792.1**

(22) Anmeldetag: **07.09.2010**

(51) Int Cl.:
*B60T 8/171* *(2006.01)*      *B60W 40/10* *(2012.01)*

(86) Internationale Anmeldenummer:
**PCT/EP2010/063107**

(87) Internationale Veröffentlichungsnummer:
**WO 2011/054563 (12.05.2011 Gazette 2011/19)**

(54) **VERFAHREN ZUR EINSTELLUNG EINES GRENZWERTS EINER FAHRZEUGZUSTANDSGRÖße BEI EINEM UNFALL**

METHOD FOR SETTING A LIMIT VALUE OF A VEHICLE PARAMETER IN CASE OF AN ACCIDENT

PROCEDE DE DETERMINATION D'UNE VALEUR LIMITE D'UN PARAMETRE D'UN VEHICULE EN CAS D'ACCIDENT

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **03.11.2009   DE 102009046337**

(43) Veröffentlichungstag der Anmeldung:
**12.09.2012   Patentblatt 2012/37**

(73) Patentinhaber: **Robert Bosch GmbH**
**70442 Stuttgart (DE)**

(72) Erfinder: **STABREY, Stephan**
**70174 Stuttgart (DE)**

(56) Entgegenhaltungen:
**EP-A1- 1 642 793      EP-A2- 1 215 097**
**WO-A1-2006/106025     DE-A1-102005 016 009**
**DE-C1- 4 436 162**

**Beschreibung**

Die Erfindung bezieht sich auf ein Verfahren zur Einstellung eines Grenzwerts einer Fahrzeugzustandsgröße in einem Fahrerassistenzsystem in einem Fahrzeug bei einem Unfall.

Stand der Technik

In der DE 10 2005 016 009 A1 wird ein Verfahren zur Stabilisierung eines Fahrzeugs nach einer Kollision beschrieben, bei dem der Fahrzustand des Fahrzeugs hinsichtlich des Auftretens einer Kollision überwacht, ein Sollwert für eine Fahrzeugbewegungsgröße unabhängig vom Lenkwunsch des Fahrers berechnet und die Fahrzeugbewegungsgröße im Falle einer Kollision auf diesen Sollwert eingeregelt wird. Um den Stabilisierungseingriff unabhängig vom Lenkwunsch des Fahrers durchführen zu können, ist das Verfahren auf Fahrzeuge mit einer Aktivlenkung anwendbar, bei der dem vom Fahrer vorgegebenen Lenkwinkel ein Zusatzlenkwinkel überlagerbar ist. Auf diese Weise kann im Falle einer Kollision des Fahrzeugs die Auswirkung einer Schreckreaktion des Fahrers reduziert werden, wodurch eine schnellere und wirksamere Stabilisierung erreicht wird.

Das in der DE 10 2005 016 009 A1 beschriebene Verfahren ermöglicht es, auch im Falle einer Kollision über ein Fahrerassistenzsystem im Fahrzeug einen stabilisierenden Eingriff, insbesondere auf der Basis der mittels eines entsprechenden Sensors gemessenen Gierrate durchzuführen. Da solche Eingriffe (z. B. radindividuelle Bremseingriffe eines elektronischen Stabilitätsprogramms ESP) weitreichende Auswirkungen auf die Fahrzeugbewegung haben können, muss sichergestellt sein, dass die der Berechnung zugrunde liegenden Messgrößen korrekt sind. Dies wird durch eine Überwachung der Sensorsignale sichergestellt. Mit einer einfachen Überwachung wird beispielsweise überprüft, ob das Signal des Sensors innerhalb physikalisch plausibler Grenzen liegt. Ist dies nicht der Fall, wird das Fahrerassistenzsystem zwangsweise z. B. in einen Modus geringerer Funktionalität umgeschaltet, für den das überwachte Sensorsignal nicht benötigt wird.

Aus der WO 2006/106025 A1 ist es bekannt, Sensorsignale, die in einem Fahrerassistenzsystem verarbeitet werden, in fahrdynamischen Grenzsituationen einer Plausibilisierung zu unterziehen. Der Signal-Plausibilitätsbereich wird im Falle einer Kollision vergrößert, um das betreffende Fahrzeugsystem voll funktionsfähig zu halten. Hierbei wird wenigstens ein Plausibilitätskriterium, beispielsweise ein vorgegebener Grenzwert für einen Absolutwert, modifiziert, wodurch gewährleistet ist, dass die Funktion des übergeordneten Systems auch in Grenzsituationen erhalten bleibt.

Offenbarung der Erfindung

Der Erfindung liegt die Aufgabe zugrunde, bei einem Unfall die Funktionalität eines Fahrerassistenzsystems in einem Fahrzeug soweit wie möglich aufrechtzuerhalten.

Diese Aufgabe wird erfindungsgemäß mit den Merkmalen des Anspruches 1 gelöst. Die Unteransprüche geben zweckmäßige Weiterbildungen an.

Das erfindungsgemäße Verfahren dient zur Einstellung eines Grenzwerts für eine Sensorsignalüberwachung in einem Fahrerassistenzsystem in einem Fahrzeug bei einem Unfall. Hintergrund ist die Beibehaltung der größtmöglichen Funktionalität des Fahrerassistenzsystems.

Zur Detektierung eines Unfalls wird eine die Unfallschwere kennzeichnende Kenngröße auf Überschreitung eines zugeordneten Schwellenwerts überprüft. Sofern der Schwellenwert überschritten ist, kann von einem Unfall mit einer bestimmten Unfallschwere ausgegangen werden, woraufhin erfindungsgemäß der Grenzwert der betrachteten Fahrzeugzustandsgröße verändert wird. Gegebenenfalls kann das Vorliegen eines Unfalls auch von einem Airbagsystem signalisiert werden. Auf diese Weise wird der Grenz- bzw. Schwellenwert der Fahrzeugzustandsgröße situationsabhängig ermittelt und stellt somit keine feste Größe dar, so dass flexibel auf die aktuelle Unfallsituation reagiert werden kann und insbesondere die Funktionalität des Fahrerassistenzsystems in Abhängigkeit der Unfallschwere weiter beibehalten werden kann. Damit sind autonom durchgeführte Eingriffe über das Fahrerassistenzsystem über einen größeren Betriebsbereich möglich und können insbesondere auch noch bei Unfällen durchgeführt werden, was zu einer Reduzierung der Unfallfolgen beiträgt.

Die Änderung des Grenzwerts der Fahrzeugzustandsgröße wird bevorzugt auf der Grundlage sensorisch ermittelter Daten durchgeführt, die im Augenblick des Unfalls aufgenommen werden, so dass die Unfallschwere direkt oder indirekt in die Bestimmung des Grenzwerts einfließt. Hierbei ist es zweckmäßig, dass die die Unfallschwere kennzeichnende Kenngröße als Messgröße ermittelt und der Grenzwert der betrachteten Fahrzeugzustandsgröße in Abhängigkeit der Messgröße bestimmt wird. Bei der Kenn- bzw. Messgröße handelt es sich um mindestens einen Beschleunigungswert, der beispielsweise über die Airbag-Sensorik im Fahrzeug ermittelt wird. Aus diesen sensorisch ermittelten Beschleunigungswerten kann auf die Unfallschwere rückgeschlossen werden, zugleich dienen die Beschleunigungen zur Festlegung des Grenzwerts der Fahrzeugzustandsgröße. Der Grenzwert der Fahrzeugzustandsgröße wird als Funktion mindestens eines Beschleunigungswertes bestimmt, wobei sowohl eine lineare Abhängigkeit des Grenzwerts als auch eine nichtlineare Abhängigkeit in Betracht kommt. Es kommen grundsätzlich Beschleunigungswerte verschiedener Fahrzustandsgrößen in Betracht, insbesondere die Fahrzeuglängsbeschleunigung und/oder die Fahrzeugquerbeschleunigung, aber auch beispielsweise die Gierbeschleunigung.

Bei Berücksichtigung der Beschleunigungssensoren des Airgabsystems oder einer sonstigen Sensorik im Fahrzeug können die auf das Fahrzeug wirkenden Längs- und Querkräfte aus den Längs- und Querbeschleunigungen unter Berücksichtigung der Fahrzeugmasse abgeschätzt werden. Die Längs- und Querkraft kann zur Bestimmung eines maximalen Giermoments um die Fahrzeughochachse herangezogen werden, wobei auch die maximalen Hebelarme berücksichtigt werden, die sich unter der Annahme eines Fahrzeugschwerpunkts in der geometrischen Mitte des Fahrzeugs aus der halben Fahrzeugbreite bzw. der halben Fahrzeuglänge bestimmen. Bei Kenntnis des maximalen Giermoments kann aus dem Drallsatz unter Berücksichtigung des Trägheitsmoments des Fahrzeugs um die Hochachse ein bei den gegebenen äußeren Kräften physikalisch plausibler Gierbeschleunigungs-Grenzwert bestimmt werden, der somit aus den Längs- und Querbeschleunigungen im Zeitpunkt des Unfalls bestimmt wird.

Grundsätzlich können auch Grenzwerte sonstiger Fahrzeugzustandsgrößen verändert werden, die sich aus aktuellen sensorisch ermittelten Daten im Zeitpunkt des Unfalls bestimmen lassen. Des Weiteren ist es möglich, den oben beschriebenen Gierbeschleunigungs-Grenzwert zur Grundlage weiterer Ermittlungen zu machen, insbesondere zur Bestimmung eines Gierraten-Grenzwerts, indem der Gierbeschleunigungs-Grenzwert integriert wird.

Mittels des erfindungsgemäßen Verfahrens kann eine mehrstufige Sensorüberwachung durchgeführt werden. Soweit die die Unfallschwere kennzeichnende Kenngröße unterhalb des zugeordneten Schwellenwerts liegt, liegt kein Unfall vor; in diesem Fall werden die Grenzwerte der betrachteten Fahrzeugzustandsgröße auf Initialwerte gesetzt. Die Überwachung der Funktionalität der Sensorik, insbesondere des Gierratensensors, erfolgt dann über aus dem Stand der Technik bekannte Methoden, unter anderem durch den Vergleich mit diesen konstanten Grenzwerten.

Sofern die die Unfallschwere kennzeichnende Kenngröße auf einen Unfall geringer bis mittlerer Schwere schließen lässt, der jedoch noch unterhalb eines oberen Schwellenwertes liegt, welcher mechanische Belastungsgrenzen der Sensorik angibt, wird nach dem erfindungsgemäßen Verfahren der Grenzwert der betrachteten Fahrzeugzustandsgröße in Abhängigkeit von weiteren Zustandsgrößen im Augenblick des Unfalls ermittelt. Insbesondere wird ein Gierbeschleunigungs-Grenzwert und/oder ein Gierraten-Grenzwert aus der Fahrzeuglängsbeschleunigung und der Fahrzeugquerbeschleunigung im Zeitpunkt des Unfalls bestimmt.

Sofern ein Unfall mit hoher Schwere vorliegt, was der Fall ist, wenn die betrachtete Kenngröße einen zugeordneten oberen Schwellenwert überschreitet, muss davon ausgegangen werden, dass die Beschleunigungen außerhalb der mechanischen Belastungsgrenzen der Sensorik, insbesondere des Gierratensensors liegen, so dass mindestens ein Sensor mit hoher Wahrscheinlichkeit defekt ist. In diesem Fall kann das Fahrerassistenzsystem umparametriert werden, wobei insbesondere auf eine reduzierte Funktionalität umgeschaltet wird, für die die Signale des wahrscheinlich defekten Sensors nicht benötigt werden. Da bei Unfällen mit hoher Schwere die Schäden am Fahrzeug in der Regel so groß sind, dass eine gezielte Beeinflussung der Fahrzeugbewegung ohnehin kaum noch möglich ist, fällt die reduzierte Funktionalität der Fahrdynamikregelung bzw. eines sonstigen Eingriffs eines Fahrerassistenzsystems kaum ins Gewicht. In solchen Situationen könnten z. B. alle vier Räder des Fahrzeugs automatisch abgebremst werden, um es schnellstmöglich zum Stehen zu bringen. Dies ist auch bei einem defekten Gierratensensor möglich.

Soweit als die Unfallschwere kennzeichnende Kenngröße eine Fahrzeugbeschleunigung, beispielsweise die Fahrzeuglängsbeschleunigung und/oder die Fahrzeugquerbeschleunigung berücksichtigt wird, die beispielsweise über die Airbag-Sensorik oder über eine sonstige Fahrzeugsensorik zu ermitteln sind, wird diese Kenngröße vorzugsweise zugleich der Ermittlung des Grenzwerts der betrachteten Fahrzeugzustandsgröße zugrunde gelegt, bei der es sich insbesondere um die Gierbeschleunigung bzw. die Gierrate handelt. Diese Vorgehensweise hat den Vorteil, dass allein auf der Grundlage der gemessenen Beschleunigungen sowohl eine Entscheidung über die Unfallschwere getroffen als auch eine Grenzwertanpassung der interessierenden Fahrzeugzustandsgröße durchgeführt werden kann.

Weitere Vorteile und zweckmäßige Ausführungen sind den weiteren Ansprüchen, der Figurengeschreibung und der Zeichnung zu entnehmen, in der ein Ablaufschema zur Durchführung des Verfahrens zur Einstellung eines Grenzwerts bei einem Unfall dargestellt ist.

Das in der Figur dargestellte Ablaufschema betrifft die Einstellung eines Grenzwerts einer Fahrzeugzustandsgröße in einem Fahrzeug bei einem Unfall geringer bis mittlerer Schwere. Das Verfahren läuft in einem Regel- bzw. Steuergerät im Fahrzeug ab, das insbesondere Teil eines Fahrerassistenzsystems ist, vorzugsweise eines elektronischen Stabilitätsprogrammes ESP. Über das Fahrerassistenzsystem werden auf der Grundlage sensorisch ermittelter Daten Stelleingriffe in Aktuatoren durchgeführt mit dem Ziel, die Fahrdynamik des Fahrzeugs zu beeinflussen. Über das elektronische Stabilitätsprogramm ESP werden beispielsweise Bremseingriffe zur Fahrzeugstabilisierung durchgeführt. Unter den nach-folgend beschriebenen Voraussetzungen können derartige Eingriffe über ein Fahrerassistenzsystem auch nach dem Eintreten eines Unfalles durchgeführt werden.

Gemäß Verfahrensschritt 1 werden zunächst über eine fahrzeugeigene Sensorik, insbesondere über die Airbag-Sensorik des Fahrzeugs die Fahrzeuglängsbeschleunigung $a_x$ und die Fahrzeugquerbeschleuni-

gung $a_y$ gemessen. In den folgenden Verfahrensschritten 2 und 3 erfolgt eine Abfrage, ob die jeweiligen Beschleunigungswerte $a_x$, $a_y$ innerhalb bzw. außerhalb von Bereichen liegen, die durch einen unteren Schwellenwert $a_{lim,l}$ und einen oberen Schwellenwert $a_{lim,u}$ festgelegt sind, wobei der Längsbeschleunigung $a_x$ und der Querbeschleunigung $a_y$ jeweils ein unterer und oberer Schwellenwert zugeordnet ist.

Im Verfahrensschritt 2 erfolgt zunächst die Abfrage, ob die Beschleunigungen $a_x$ und $a_y$ den ihnen jeweils zugeordneten unteren Schwellenwert $a_{lim,l}$ betragsmäßig überschreiten. Ist dies nicht der Fall, wird der Nein-Verzweigung ("N") folgend wieder zum Beginn des Verfahrens nach Verfahrensschritt 1 zurückgekehrt; in diesem Fall liegen die gemessenen Beschleunigungen in einem niedrigen Wertebereich, es liegt somit kein Unfall vor und die Sensorsignalüberwachung kann im ESP wie beim Stand der Technik üblich mit konstanten Grenzwerten erfolgen.

Ergibt dagegen die Abfrage gemäß Verfahrensschritt 2, dass die gemessenen Beschleunigungen den unteren Schwellenwert $a_{lim,l}$ überschreiten, so muss von einem Unfall, beispielsweise einer Kollision ausgegangen werden. In diesem Fall - bzw. wenn vom Airbag-System das Vorliegen einer Kollision signalisiert wird - wird der Ja-Verzweigung ("Y") folgend zum nächsten Verfahrensschritt 3 fortgefahren, in welchem eine weitere Überprüfung durchgeführt wird, ob die Beschleunigungswerte $a_x$ und $a_y$ einen jeweils zugeordneten oberen Schwellenwert $a_{lim,u}$ überschreiten. Mit dieser zusätzlichen Abfrage soll klargestellt werden, ob es sich um einen Unfall geringer bzw. mittlerer Schwere oder einen Unfall hoher Schwere handelt, was zu unterschiedlichen Konsequenzen im Verfahrensablauf führt.

Ergibt die Abfrage gemäß Verfahrensschritt 3, dass der obere Schwellenwert $a_{lim,u}$ überschritten wird, so liegt ein Unfall hoher Schwere vor. In diesem Fall wird der Ja-Verzweigung folgend zum Verfahrensschritt 4 fortgefahren, in welchem das elektronische Stabilitätsprogramm ESP mit einer reduzierten Funktionalität (ESP$_{red}$) umparametriert wird. Bei einem Unfall hoher Schwere muss davon ausgegangen werden, dass die mechanischen, aus dem Unfall resultierenden Belastungsgrenzen insbesondere eines Gierratensensors im Fahrzeug überschritten werden und somit der Gierratensensor defekt sein könnte. Durch die Umparametrierung kann die Funktionalität des ESP-Systems so geändert werden, dass die Sensordaten des Gierratensensors nicht verwertet werden, z. B. indem das Fahrzeug automatisch abgebremst wird. Aufgrund der hohen Schwere des Unfalls ist davon auszugehen, dass die Schäden am Fahrzeug in der Regel so groß sind, dass eine reduzierte Funktionalität der Fahrdynamikregelung nicht stark ins Gewicht fällt.

Ergibt dagegen die Abfrage im Verfahrensschritt 3, dass die gemessene Längsbeschleunigung $a_x$ und Querbeschleunigung $a_y$ den oberen Schwellenwert $a_{lim,u}$ nicht überschreitet, liegt ein Unfall bzw. eine Kollision geringer bis mittlerer Schwere vor. In diesem Fall wird der Nein-Verzweigung folgend zum Verfahrensschritt 5 fortgefahren, in welchem auf der Grundlage der beim Unfall ermittelten Beschleunigungswerte $a_x$ und $a_Y$ ein Gierbeschleunigungs-Grenzwert $\ddot{\psi}_{max}$ in all-gemeiner Weise gemäß des Zusammenhangs

$$\ddot{\psi}_{max} = f(a_x, a_y)$$

ermittelt wird. Der Gierbeschleunigungs-Grenzwert $\ddot{\psi}_{max}$ hängt gemäß

$$\ddot{\psi}_{max} = \frac{M_{z,max}}{J}$$

von dem um die Fahrzeughochachse wirkenden maximalen Giermoment $M_{z,max}$ und dem Trägheitsmoment $J$ des Fahrzeugs um die Fahrzeughochachse ab. Das maximale Giermoment $M_{z,max}$ bestimmt sich gemäß

$$M_{z,max} = \left| F_x \cdot \frac{b}{2} \right| + \left| F_y \cdot \frac{l}{2} \right|$$

aus dem Betrag der um die Hochachse wirkenden Einzelmomente, die sich aufgrund aktueller Kräfte $F_x$ in Fahrzeuglängsrichtung und $F_y$ in Fahrzeugquerrichtung unter der Annahme ergeben, dass der Fahrzeugschwerpunkt sich in der geometrischen Mitte des Fahrzeugs befindet und maximale Hebelarme $b/2$ und $l/2$ wirksam sind, wobei mit $b$ die Fahrzeugbreite und mit $l$ die Fahrzeuglänge bezeichnet ist.

Die Längskraft $F_x$ und die Querkraft $F_y$ werden aus der sensorisch ermittelten Längsbeschleunigung $a_x$ und Querbeschleunigung $a_y$ sowie der Fahrzeugmasse $m$ bestimmt:

$$F_x = m \cdot a_x$$
$$F_y = m \cdot a_y$$

Es genügt somit die Kenntnis der aktuellen Längs- und Querbeschleunigung im Zeitpunkt des Unfalls und der weiteren geometrischen Daten des Fahrzeugs sowie der Masse und des Trägheitsmomentes, um Grenzwerte für die Gierbeschleunigung zu ermitteln, die im Fahrerassistenzsystem ESP auch nach dem Eintreten eines Unfalls verwendet werden können.

Im Verfahrensschritt 6 wird durch Integration des Gierbeschleunigungs-Grenzwerts $\ddot{\psi}_{max}$ gemäß

$$\dot{\psi}_{max} = \int \ddot{\psi}_{max}$$

ein Gierraten-Grenzwert $\dot{\psi}_{max}$ ermittelt. Im nachfolgenden Verfahrensschritt 7 werden die Grenzwerte $\dot{\psi}_{max}$ und $\ddot{\psi}_{max}$ dem elektronischen Stabilitätsprogramm ESP zugeführt, in welchem das auch nach dem Eintreten des Unfalls gelieferte Signal des Gierraten-Sensors auf die Überschreitung der entsprechenden Grenzwerte überwacht wird. Solange die Grenzwerte nicht überschritten werden, kann die somit die auf Gierratenmesswerten basierende Funktionalität des ESP-Systems genutzt werden.

**Patentansprüche**

1. Verfahren zur Einstellung eines Grenzwerts einer Fahrzeugzustandsgröße in einem Fahrerassistenzsystem in einem Fahrzeug bei einem Unfall, bei dem für den Fall, dass eine die Unfallschwere kennzeichnende Kenngröße ($a_x$, $a_y$) einen zugeordneten Schwellenwert überschreitet, der Grenzwert ($\dot{\psi}_{max}$, $\ddot{\psi}_{max}$) der Fahrzeugzustandsgröße verändert wird, wobei der Grenzwert ($\dot{\psi}_{max}$, $\ddot{\psi}_{max}$) der Fahrzeugzustandsgröße als Funktion von Beschleunigungswerten ($a_x$, $a_y$) bestimmt wird, welche während des Unfalls auftreten, **dadurch gekennzeichnet, dass** Beschleunigungswerte ($a_x$, $a_y$) in Fahrzeuglängs- und/oder in Fahrzeugquerrichtung berücksichtigt werden und aus der aktuellen Längsbeschleunigung ($a_x$) bzw. der Querbeschleunigung ($a_y$) eine Kraft ($F_x$, $F_y$) ermittelt wird, wobei die ermittelte Kraft ($F_x$, $F_y$) in ein maximales Moment ($M_{z,max}$) umgerechnet wird, wobei ein Gierbeschleunigungs-Grenzwert ($\ddot{\psi}_{max}$) und/oder ein Gierraten-Grenzwert ($\dot{\psi}_{max}$) verändert wird und wobei der Gierbeschleunigungs-Grenzwert ($\ddot{\psi}_{max}$) aus einem maximalen Moment ($M_{z,max}$) um die Fahrzeughochachse ermittelt wird.

2. Verfahren nach Anspruch 1, **dadurch gekennzeichnet, dass** der Grenzwert ($\dot{\psi}_{max}$, $\ddot{\psi}_{max}$) der Fahrzeugzustandsgröße linear von den Beschleunigungswerten ($a_x$, $a_y$) abhängt.

3. Verfahren nach Anspruch 1 oder 2, **dadurch gekennzeichnet, dass** die Änderung des Grenzwerts ($\dot{\psi}_{max}$, $\ddot{\psi}_{max}$) der Fahrzeugzustandsgröße auf der Grundlage sensorisch im Augenblick des Unfalls ermittelter Daten durchgeführt wird.

4. Verfahren nach Anspruch 3, **dadurch gekennzeichnet, dass** die Daten eines Airbag-Sensors ausgewertet werden.

5. Verfahren nach einem der Ansprüche 1 bis 4, **da-**

**durch gekennzeichnet, dass** die die Unfallschwere kennzeichnende Kenngröße eine Fahrzeugbeschleunigung ($a_x$, $a_y$) ist.

6. Regel- bzw. Steuergerät zur Durchführung des Verfahrens nach einem der Ansprüche 1 bis 5.

7. Fahrerassistenzsystem in einem Fahrzeug, insbesondere elektronisches Stabilitätsprogramm (ESP), mit einem Regel- bzw. Steuergerät nach Anspruch 6.

**Claims**

1. Method for setting a limiting value of a vehicle state variable in a driving assistance system in a vehicle in the event of an accident in which, in the event of a characteristic variable ($a_x$, $a_y$) which characterizes the severity of an accident exceeding an assigned threshold value, the limiting value ($\dot{\psi}_{max}$, $\ddot{\psi}_{max}$) of the vehicle state variable is changed, wherein the limiting value ($\dot{\psi}_{max}$, $\ddot{\psi}_{max}$) of the vehicle state variable is determined as a function of acceleration values ($a_x$, $a_y$) which occur during the accident, **characterized in that** acceleration values ($a_x$, $a_y$) are taken into account in the vehicle longitudinal direction and/or in the vehicle transverse direction and a force ($F_x$, $F_y$) is determined on the basis of the current longitudinal acceleration ($a_x$) and/or the lateral acceleration ($a_y$), wherein the determined force ($F_x$, $F_y$) is converted into a maximum torque ($M_{z,max}$), wherein a yaw acceleration limiting value ($\ddot{\psi}_{max}$) and/or a yaw rate limiting value ($\dot{\psi}_{max}$) is changed, and wherein the yaw acceleration limiting value ($\ddot{\psi}_{max}$) is determined from a maximum torque ($M_{z,max}$) about the vehicle vertical axis.

2. Method according to Claim 1, **characterized in that** the limiting value ($\dot{\psi}_{max}$, $\ddot{\psi}_{max}$) of the vehicle state variable depends linearly on the acceleration values ($a_x$, $a_y$).

3. Method according to Claim 1 or 2, **characterized in that** the change in the limiting value ($\dot{\psi}_{max}$, $\ddot{\psi}_{max}$) of the vehicle state variable is carried out on the basis of data which are obtained by sensor at the moment of the accident.

4. Method according to Claim 3, **characterized in that** the data of an airbag sensor is evaluated.

5. Method according to one of Claims 1 to 4, **characterized in that** the characteristic variable which characterizes the severity of the accident is a vehicle acceleration ($a_x$, $a_y$).

6. Closed-loop or open-loop control device for carrying out the method according to one of Claims 1 to 5.

**7.** Driver assistance system in a vehicle, in particular electronic stability program (ESP), having a closed-loop or open-loop control device according to Claim 6.

**Revendications**

**1.** Procédé pour ajuster une valeur limite d'un paramètre d'un véhicule dans un système d'assistance à la conduite dans un véhicule en cas d'accident, dans lequel, au cas où une grandeur caractéristique ($a_x$, $a_y$) caractérisant la gravité d'un accident dépasse une valeur seuil associée, la valeur limite ($\dot{\psi}_{max}$, $\ddot{\psi}_{max}$) du paramètre du véhicule est modifiée, la valeur limite ($\dot{\psi}_{max}$, $\ddot{\psi}_{max}$) du paramètre du véhicule étant déterminée en fonction de valeurs d'accélération ($a_x$, $a_y$), qui se produisent pendant l'accident, **caractérisé en ce que** des valeurs d'accélération ($a_x$, $a_y$) dans la direction longitudinale du véhicule et/ou dans la direction transversale du véhicule sont prises en compte et une force ($F_x$, $F_y$) est déterminée à partir de l'accélération longitudinale actuelle ($a_x$) ou de l'accélération transversale ($a_y$),
la force déterminée ($F_x$, $F_y$) étant convertie en un couple maximal ($M_{z,max}$),
une valeur limite d'accélération en lacet ($\ddot{\psi}_{max}$) et/ou une valeur limite de la vitesse de lacet ($\dot{\psi}_{max}$) étant modifiées
et la valeur limite d'accélération en lacet ($\ddot{\psi}_{max}$) étant déterminée à partir d'un couple maximal ($M_{z,max}$) autour de l'axe vertical du véhicule.

**2.** Procédé selon la revendication 1, **caractérisé en ce que** la valeur limite ($\dot{\psi}_{max}$, $\ddot{\psi}_{max}$) du paramètre du véhicule dépend linéairement des valeurs d'accélération ($a_x$, $a_y$).

**3.** Procédé selon la revendication 1 ou 2, **caractérisé en ce que** la variation de la valeur limite ($\dot{\psi}_{max}$, $\ddot{\psi}_{max}$) du paramètre du véhicule est effectuée sur la base de données déterminées par des capteurs à l'instant de l'accident.

**4.** Procédé selon la revendication 3, **caractérisé en ce que** les données d'un capteur d'airbag sont analysées.

**5.** Procédé selon l'une quelconque des revendications 1 à 4, **caractérisé en ce que** la grandeur caractéristique caractérisant la gravité de l'accident est une accélération du véhicule ($a_x$, $a_y$).

**6.** Appareil de régulation ou de commande pour mettre en oeuvre le procédé selon l'une quelconque des revendications 1 à 5.

**7.** Système d'assistance à la conduite dans un véhicule, en particulier programme électronique de stabilisation (ESP), comprenant un appareil de régulation ou de commande selon la revendication 6.

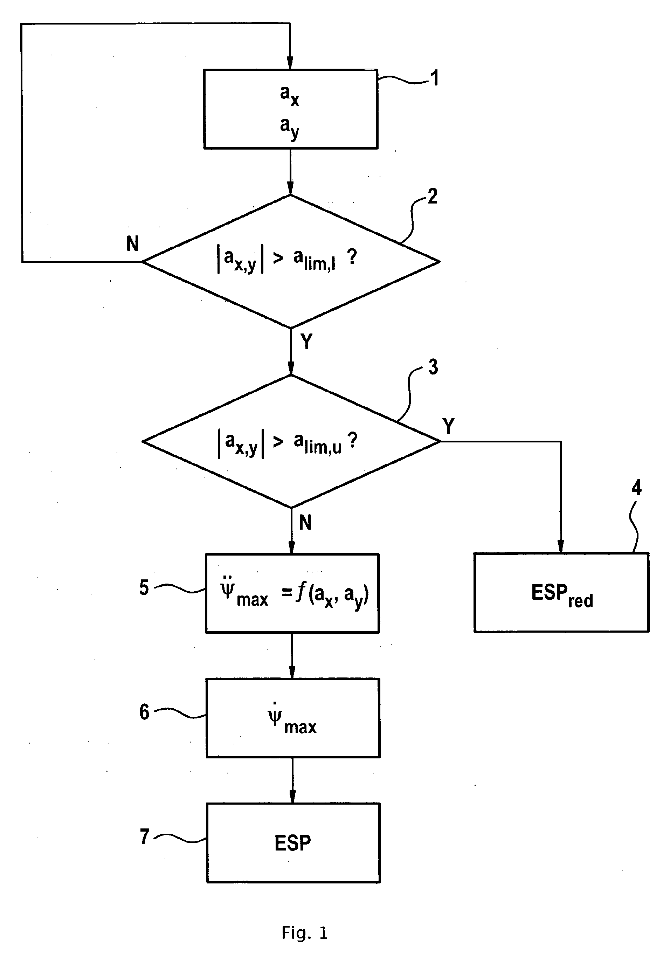

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005016009 A1
- WO 2006106025 A1